# FASCICULE DE BREVET EUROPEEN

(11) **EP 1 170 157 B1**
(45) Date de publication et mention de la délivrance du brevet: **17.12.2003**
(21) Numéro de dépôt: 01401709.9
(22) Date de dépôt: 27.06.2001
(51) Int. Cl.: B60G 15/06, F16C 33/76

(54) **Butée de suspension à moyens de retenue**
Axialwälzlager für eine Fahrzeugaufhängung mit Rückhaltemittel
Axial rolling bearing for a vehicle suspension with restrainning means

(30) Priorité: 06.07.2000 FR 0008826
(43) Date de publication de la demande: 09.01.2002
(73) Titulaire: SKF FRANCE, F-92140 Clamart (FR)
(72) Inventeur: Beghini, Eric, 37390 La Membrole (FR); Houdayer, Christophe, 37000 Tours (FR)
(74) Mandataire: Casalonga, Axel

(56) Documents cités:
- FR-A- 2 375 484
- FR-A- 2 513 334
- FR-A- 2 551 515
- FR-A- 2 778 606
- FR-A- 2 779 096

## Description

La présente invention concerne le domaine des butées de suspension utilisées en particulier sur les véhicules automobiles dans les jambes de suspension télescopiques des roues directrices.

Une butée de suspension comprend généralement une bague supérieure et une bague inférieure entre lesquelles sont disposés des éléments roulants, sous la forme de billes ou de rouleaux.

L'invention concerne plus particulièrement les butées de suspension comprenant au moins un capot en matière synthétique en contact avec l'une des deux bagues du roulement.

De façon connue en soi, la butée de suspension est disposée dans la partie supérieure de la jambe de suspension, entre une coupelle inférieure généralement métallique, servant également de siège d'appui pour un ressort de suspension, et un élément supérieur solidaire de la caisse du véhicule. Le ressort du dispositif de suspension est installé autour de la tige du piston d'amortisseur dont l'extrémité est solidaire d'un bloc-support élastique. Le roulement de butée de suspension permet un mouvement de rotation entre la coupelle d'appui du ressort, mobile en rotation, et le bloc-support élastique qui est fixé à la caisse du véhicule. La butée de suspension permet également de transmettre les efforts axiaux entre le ressort et la caisse du véhicule. Le mouvement angulaire relatif entre la coupelle d'appui du ressort et le bloc-support élastique découle d'un braquage de la roue directrice et/ou la compression du ressort de suspension. On peut se référer au document français n° 2 779 096.

Les roulements de butée de suspension sont situés sous la caisse du véhicule et à proximité immédiate des roues qui projettent, notamment par temps de pluie, des éléments polluants susceptibles de rentrer dans le roulement.

On peut utiliser de manière connue en soi, comme dans les documents US 4 995 737 ou EP-A-0 390 331 qui sert de base pour la présentation en deux parties de la revendication 1, un dispositif utilisant un ou deux capots en matière plastique, chaque capot venant coiffer une bague et possédant des moyens de retenue axiale coopérant avec l'autre capot. Les capots sont généralement réalisés en matière plastique chargée de fibres de verre pour leur conférer la résistance et la rigidité nécessaires. Ce matériau s'avère trop rigide et abrasif pour qu'une étanchéité frottante issue de ce matériau, sous la forme d'une lèvre par exemple, soit suffisamment efficace.

L'invention propose un roulement de butée de suspension comportant une étanchéité efficace et pouvant en outre être solidarisé avec la coupelle inférieure avant le montage sur la jambe de force pour constituer avec ladite coupelle un ensemble compact, pouvant être facilement manipulé et transporté sans risque de perte accidentelle de l'un des composants.

Le dispositif de roulement de butée de suspension, selon l'invention, est du type comprenant une première bague solidaire d'un capot, une deuxième bague réalisée en tôle mince, une rangée d'éléments roulants disposés entre les deux bagues, un capot solidaire de la première bague, et une coupelle apte à former un siège d'appui pour un ressort. La coupelle comprend un moyen de solidarisation axiale directe avec la deuxième bague, ledit moyen étant apte à coopérer avec des moyens de retenue disposés sur une portion tubulaire de la deuxième bague.

Avantageusement, la deuxième bague comprend une première portion torique adaptée aux éléments roulants, et une deuxième portion torique s'étendant à partir de la première portion torique radialement vers l'intérieur et axialement à l'opposé des éléments roulants.

Dans un mode de réalisation de l'invention, la deuxième bague comprend une portion radiale s'étendant à partir de la portion torique radialement vers l'intérieur et une portion tubulaire s'étendant axialement à l'opposé des éléments roulants.

Dans un mode de réalisation de l'invention, la deuxième bague comprend une portion de retenue s'étendant à partir de la deuxième portion torique.

Dans un mode de réalisation de l'invention, la portion de retenue s'étend radialement vers l'intérieur.

Dans un mode de réalisation de l'invention, la portion de retenue s'étend radialement vers l'extérieur.

Avantageusement, la coupelle comprend une rainure annulaire formée à partir d'une surface en contact avec la deuxième bague.

Dans un mode de réalisation de l'invention, la rainure comprend deux surfaces concentriques, l'une sensiblement cylindrique, l'autre pourvue d'au moins un renflement radial situé à l'opposé du fond de ladite rainure et apte à coopérer avec la deuxième bague.

Dans un mode de réalisation de l'invention, la rainure est de diamètre inférieur à celui du cercle fictif passant par le centre des éléments roulants.

Avantageusement, la deuxième bague est apte à coopérer avec la rainure.

De préférence, la coupelle comprend un insert métallique et une partie en matériau synthétique par exemple moulé.

La coupelle peut comprendre au moins une saillie radiale disposée dans une dépression ou une lumière de la deuxième bague.

La coupelle peut aussi être emmanchée sur la deuxième bague.

La coupelle peut comprendre un bourrelet radial apte à coopérer avec un bourrelet radial correspondant du capot pour assurer la solidarisation axiale de ces éléments.

On réalise un roulement de butée de suspension dont l'encombrement tant axial que radial n'est pas modifié par rapport aux roulements connus, et qui possède une excellente étanchéité et des moyens de retenue de ces différents éléments les uns avec les autres.

L'invention sera mieux comprise et d'autres avantages apparaîtront à la lecture de la description détaillée de quelques modes de réalisation pris à titre d'exemples nullement limitatifs et illustrés par les dessins annexés, sur lesquels :
- la figure 1 est une vue en coupe axiale d'un roulement de butée de suspension à l'état monté;
- la figure 2 est une vue de détail de la figure 1; et
- les figures 3 à 6 montrent des variantes.

Un amortisseur comprend un cylindre dans lequel peut coulisser un piston dont la tige 1 est liée par son extrémité supérieure à un bloc-support élastique 2, qui vient en appui dans un élément du châssis 3 formant siège et est solidarisé avec celui-ci.

Le bloc-support élastique 2 comprend :
- un élément de liaison intérieur 4, réalisé en deux parties 4a et 4b, sur lequel vient se monter l'extrémité de la tige 1 du piston d'amortisseur au moyen d'un écrou 5,
- un élément de liaison extérieur 6 servant à la solidarisation avec le châssis 3,
- une coupelle supérieure 7 servant de siège d'appui pour le roulement de butée 8,
- un bloc de caoutchouc 9 adhérisé à la surface de ces trois pièces et réalisant une liaison entre celles-ci avec filtration des vibrations.

L'élément de liaison extérieur 6 est, à une extrémité, fixé au châssis 3, par exemple par vissage ou boulonnage, et, à l'autre extrémité, est disposé axialement entre les deux parties 4a et 4b. La coupelle supérieure 7 est disposée axialement au niveau de l'élément de liaison intérieur 4, mais est de diamètre supérieur. On voit également le ressort de suspension 10 dont l'extrémité supérieure s'appuie sur la coupelle inférieure 11 qui, à son tour, s'appuie sur le roulement de butée 8.

La coupelle supérieure 7 comprend une portion cylindrique 7a s'étendant vers le bas, à l'opposé du châssis 3, et une portion radiale 7b s'étendant vers l'extérieur. La surface intérieure de la portion cylindrique 7a et la surface supérieure de la portion radiale 7b sont recouvertes par le matériau élastique utilisé dans le bloc-support élastique 2.

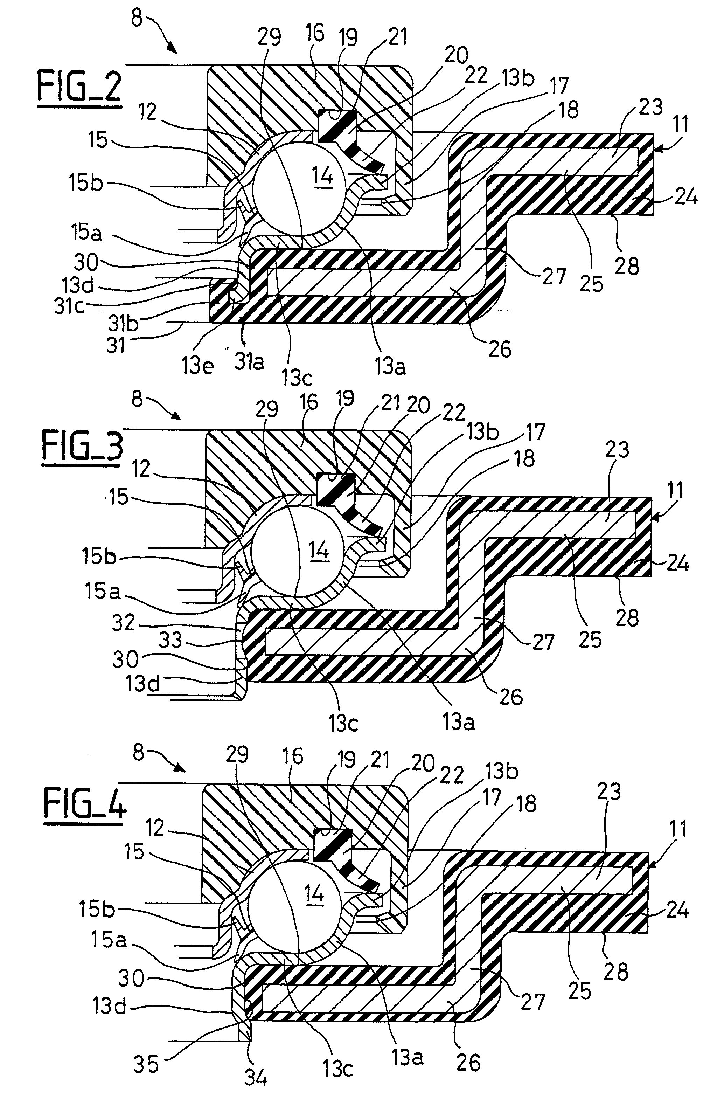

La butée de suspension 8, proprement dite, est mieux visible sur la figure 2 et comprend une bague supérieure 12, et une bague inférieure 13, toutes deux en tôle, entre lesquelles sont logées les billes 14. Les billes 14 sont maintenues par une cage 15 en matériau synthétique, qui se prolonge d'un côté par une lèvre d'étanchéité 15a venant frotter sur la bague inférieure 13 et de l'autre côté par une lèvre 15b venant frotter sur une portée de la bague supérieure 12.

Le roulement de butée 8 comprend, en outre, un capot supérieur 16, en matériau synthétique tel qu'un polyamide chargé de fibres de verre, recouvrant la surface de la bague supérieure 12 à l'opposé des éléments roulants 14 et en concordance de forme avec la surface extérieure de la portion axiale 7a et la surface inférieure de la portion radiale 7b de la coupelle supérieure 7. Le capot supérieur 16 comprend une jupe sensiblement tubulaire 17 s'étendant vers le bas à partir de son bord de grand diamètre et entourant radialement au moins en partie les éléments roulants 14. Sur l'alésage de la jupe 17, à proximité de son extrémité libre inférieure, sont formées des protubérances radiales 18 en saillie vers l'intérieur et formant crochets. On pourrait bien sûr remplacer les crochets 18 par un bourrelet annulaire continu en saillie radialement vers l'intérieur.

La bague inférieure 13 comprend une portion toroïdale 13a présentant une surface concave adaptée aux éléments roulants 14 et une portion radiale 13b prolongeant vers l'extérieur la portion toroïdale 13a et située sensiblement à mi-hauteur des éléments roulants. L'extrémité libre de la portion radiale 13b est de diamètre supérieur au diamètre du cercle inscrit sur le sommet des crochets 18. Ainsi, les crochets 18 sont aptes à retenir axialement la bague inférieure 13 par rapport au reste du roulement de butée avant le montage définitif dans l'ensemble de suspension.

La bague inférieure 13 comprend, en outre, une autre portion radiale 13c prolongeant vers l'intérieur l'extrémité de petit diamètre de la portion toroïdale 13a. En d'autres termes, la portion radiale 13c se raccorde à la portion toroïdale 13a radialement au niveau du cercle fictif passant par le centre des billes 14. Une portion tubulaire 13d s'étend vers le bas, à l'opposé du capot 16, à partir de l'extrémité de petit diamètre de la portion radiale 13c. Une portion formant moyen de retenue sous la forme d'un rebord radial 13e prolonge vers l'intérieur l'extrémité de la portion tubulaire 13d opposée au capot 16.

Le capot supérieur 16 comprend en outre une rainure annulaire 19 à fond sensiblement radial et à bords sensiblement axiaux formés à proximité de l'extrémité libre de grand diamètre de la bague supérieure 12, à un niveau supérieur à celui des éléments roulants 14. La rainure 19 présente un diamètre supérieur à celui du cercle fictif formé par le centre des éléments roulants 14.

Le roulement de butée 8 se complète par un joint d'étanchéité 20, réalisé par exemple en caoutchouc, comprenant un talon 21 emmanché dans la rainure 19 et une lèvre 22 s'étendant à la fois vers le bas et radialement vers l'extérieur à partir du talon 21 et venant en contact de frottement avec une portée constituée par la surface supérieure de la portion radiale 13b de la bague inférieure 13. La surface 13c est annulaire et sensiblement radiale. On pourrait toutefois concevoir qu'elle soit inclinée.

Du côté extérieur des éléments roulants 14, l'étanchéité est donc assurée, d'une part, par le passage étroit formé entre la jupe 17 du capot supérieur 16 et l'extrémité libre de la portion radiale 13b de la bague inférieure 13, et, d'autre part, par le contact entre la lèvre d'étanchéité 22 et ladite portion radiale 13b de la bague inférieure 13. On obtient ainsi une étanchéité de très haute qualité. Du côté intérieur des éléments roulants 14, l'étanchéité est assurée par les lèvres 15a et 15b issues de la cage 15 et en contact respectivement avec la bague inférieure 13 et la bague supérieure 12. Là encore, on obtient une étanchéité efficace.

La bague inférieure 13 du roulement de butée 8 est en appui sur la coupelle inférieure 11 qui comprend une armature métallique 23 recouverte d'une partie en matériau synthétique 24 assurant, elle aussi, la filtration de vibrations susceptibles de remonter en provenance des roues du véhicule vers la caisse.

La coupelle inférieure 11 comporte avantageusement au moins un trou de drainage (non représenté) traversant la portion radiale 26 et son revêtement, permettant ainsi d'éviter toute accumulation d'eau dans la coupelle.

L'armature métallique 23 présente une forme générale annulaire avec deux portions radiales 25 et 26 axialement décalées et se raccordant par une portion tubulaire 27. Les portions radiales 25 et 26 s'étendent respectivement vers l'extérieur et vers l'intérieur à partir de la portion tubulaire 27. Le ressort 10 vient en appui sur une surface inférieure 28 de la partie synthétique 24 au droit de la portion radiale 25. La bague inférieure 13 est en contact par sa portion radiale 13c avec une surface radiale supérieure 29 de la partie synthétique 24 au droit de la portion radiale 26 et par sa portion tubulaire 13d avec une surface intérieure cylindrique 30 de la partie synthétique 24.

La partie synthétique 24 comprend un bourrelet radial 31 de forme générale annulaire, comprenant une portion radiale 31a disposée sous le rebord radial 13e et s'étendant vers l'intérieur à partir de la surface intérieure cylindrique 30, une portion axiale 31b disposée à l'intérieur du rebord radial 13e et s'étendant vers le haut, en direction du capot 16, à partir de la portion radiale 31a, et une portion radiale 31c disposée en haut de la portion axiale 31b et s'étendant vers l'extérieur à partir de la portion axiale 31b. La portion radiale 31c peut être continue sous la forme d'un bourrelet annulaire ou discontinue formant ainsi une pluralité de crochets. La portion radiale 31c est disposée au dessus du rebord radial 13e. Le diamètre de l'extrémité libre de la portion radiale 31c est supérieur au celui diamètre de l'extrémité libre du rebord radial 13e.

En d'autres termes, la coupelle inférieure 11 comprend une rainure délimitée par deux surfaces concentriques, l'une sensiblement cylindrique, à savoir la surface intérieure cylindrique 30 de la partie synthétique 24, l'autre pourvue d'au moins un renflement radial situé à l'opposé du fond de ladite rainure et apte à coopérer avec la bague inférieure 13, à savoir la portion radiale 31c du bourrelet 31.

L'interférence diamétrale entre ces deux éléments permet une retenue axiale entre la bague inférieure 13 et la coupelle inférieure 11. Comme le capot 16 et la bague inférieure 13 sont aussi pourvus de moyens de retenue axiale mutuelle, on forme un ensemble comprenant la coupelle inférieure 11, le capot 16, la bague supérieure 12, la bague inférieure 13, les billes 14 et la cage 15, aisé à manipuler et à transporter sans risque de perte de pièces.

Sur la figure 3, est illustrée une variante, dans laquelle la bague inférieure 13 comprend une portion tubulaire 13d plus longue que précédemment, percée d'une pluralité de lumières 32 formant moyen de retenue. Les lumières 32 peuvent être remplacées par des dépressions radiales, non représentées, obtenues en déformant la tôle vers l'intérieur. La partie synthétique 24, dépourvue de bourrelet, comprend une surface intérieure cylindrique 30 de diamètre, à l'état libre, inférieur à celui de la portion tubulaire 13d. Après montage, la matière élastique tend à reprendre sa forme et ses dimensions initiales au niveau des fenêtres et la surface intérieure cylindrique 30 se déforme et vient légèrement en saillie dans les lumières 32, assurant ainsi la solidarisation axiale de la bague inférieure 13 et de la coupelle inférieure 11. Les saillies portent la référence 33.

Sur la figure 4, est illustrée une variante, dans laquelle la bague inférieure 13 comprend une portion tubulaire 13d longue pourvue d'une déformation radiale 34 vers l'extérieur à proximité de son extrémité libre de façon qu'elle forme une rainure annulaire 35 de faible profondeur sur sa surface extérieure. La partie synthétique 24, dépourvue de bourrelet, comprend une surface intérieure cylindrique 30 de diamètre, à l'état libre, inférieur à celui de la portion tubulaire 13d. Après montage, la surface intérieure cylindrique 30 est en contact avec la rainure annulaire 35. La coupelle inférieure 11 est retenue axialement dans la rainure annulaire 35 par la déformation radiale 34 formant le moyen de retenue.

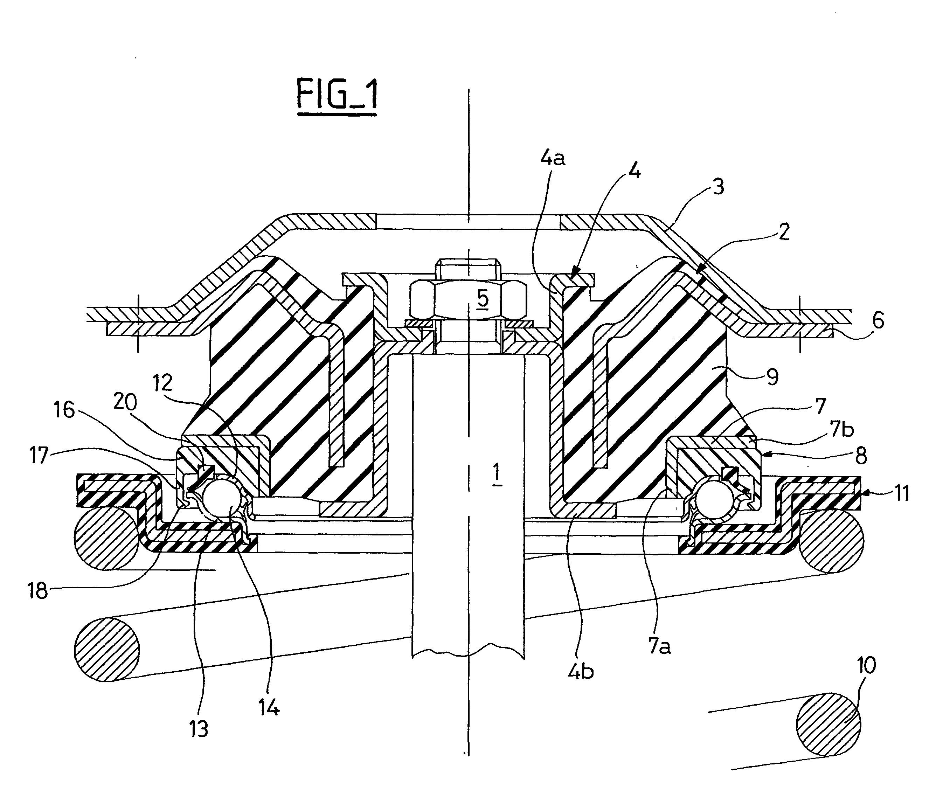

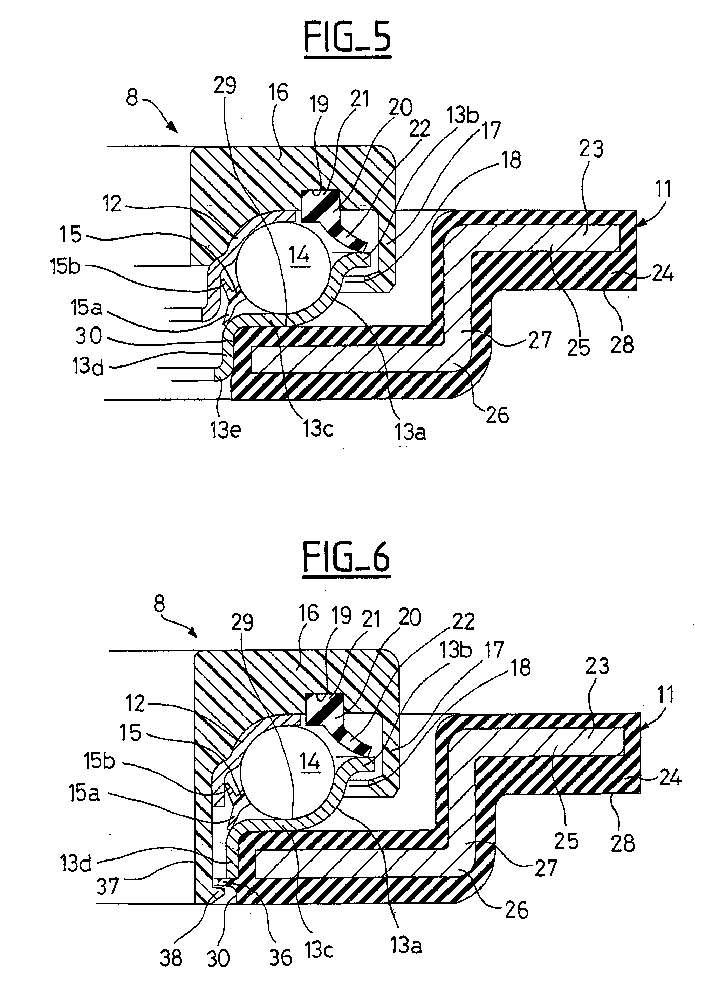

Sur la figure 5, est illustrée une variante, dans laquelle la bague inférieure 13 est semblable à celle des figures 1 et 2 et la partie synthétique 24 de la coupelle inférieure 11 est semblable à celle de la figure 4. La partie synthétique 24 est emmanchée par sa surface intérieure cylindrique 30 sur la surface extérieure de la portion tubulaire 13d.

Sur la figure 6, est illustrée une variante, dans laquelle la bague inférieure 13 comprend une portion tubulaire 13d plus courte que celle des figures 1 et 2. La partie synthétique 24 comprend un bourrelet 36 de forme générale annulaire, s'étendant radialement vers l'intérieur à partir de la surface intérieure cylindrique 30. Le bourrelet 36 est continu ou discontinu formant ainsi une pluralité de crochets et peut être en contact avec l'extrémité libre de la portion tubulaire 13d. Le capot supérieur 16 comprend une jupe tubulaire 37 s'étendant vers le bas à partir d'une zone comprise entre la bague supérieure 12 et la portion cylindrique 7a de la coupelle supérieure 7. L'extrémité libre de la jupe tubulaire 37 comprend un bourrelet radial 38 dirigé vers l'extérieur et disposé sous le bourrelet 36. Le bourrelet 38 est continu ou discontinu formant ainsi une pluralité de crochets, et présente un diamètre extérieur supérieur au diamètre intérieur du bourrelet 36. On forme ainsi des moyens de retenue axiale du capot 16 et de la coupelle inférieure 11. Les bagues supérieure 12 et inférieure 13, les billes 14 et la cage 15 sont également retenues axialement entre le capot 16 et la coupelle inférieure 11.

Le fait que le joint d'étanchéité 20 soit distinct du capot supérieur 16, permet de réaliser le capot supérieur 16 dans un matériau de haute rigidité, par exemple armé de fibres, notamment de verre, et le joint d'étanchéité 20 en matériau présentant la souplesse souhaitée pour une étanchéité efficace, par exemple en élastomère ou en matière plastique très souple et non chargée de fibres de verre. L'emmanchement du joint d'étanchéité 20 dans la rainure 19 garantit un maintien fiable dudit joint d'étanchéité 20.

Grâce à l'invention, on bénéficie, dans un encombrement réduit, d'une retenue axiale pratique et efficace pour un roulement de butée.

## Revendications

1. Dispositif de roulement de butée de suspension, du type comprenant une première bague (12), une deuxième bague (13) réalisée en tôle mince, une rangée d'éléments roulants (14) disposés entre les deux bagues, un capot (16) solidaire de et en contact avec la première bague, et une coupelle (11) apte à former un siège d'appui pour un ressort (10), **caractérisé par le fait que** la coupelle comprend un moyen de solidarisation axiale directe avec la deuxième bague, ledit moyen étant apte à coopérer avec des moyens de retenue disposés sur une portion tubulaire de la deuxième bague.

2. Dispositif selon la revendication 1, **caractérisé par le fait que** la deuxième bague comprend une portion torique (13a) adaptée aux éléments roulants, une portion radiale (13c) s'étendant à partir de la portion torique radialement vers l'intérieur et une portion tubulaire (13d) s'étendant axialement à l'opposé des éléments roulants.

3. Dispositif selon la revendication 2, **caractérisé par le fait que** la deuxième bague comprend une portion de retenue (13e) s'étendant à partir de la portion tubulaire.

4. Dispositif selon la revendication 3, **caractérisé par le fait que** la portion de retenue s'étend radialement vers l'intérieur.

5. Dispositif selon la revendication 3, **caractérisé par le fait que** la portion de retenue s'étend radialement vers l'extérieur.

6. Dispositif selon l'une quelconque des revendications précédentes, **caractérisé par le fait que** la coupelle comprend une rainure annulaire formée à partir d'une surface en contact avec la deuxième bague.

7. Dispositif selon la revendication 6, **caractérisé par le fait que** la rainure comprend deux surfaces concentriques, l'une sensiblement cylindrique, l'autre pourvue d'au moins un renflement radial situé à l'opposé du fond de ladite rainure et apte à coopérer avec la deuxième bague.

8. Dispositif selon la revendication 6 ou 7, **caractérisé par le fait que** la rainure est de diamètre inférieur à celui du cercle fictif passant par le centre des éléments roulants.

9. Dispositif selon l'une quelconque des revendications 6 à 8, **caractérisé par le fait que** la deuxième bague est apte à coopérer avec la rainure.

10. Dispositif selon l'une quelconque des revendications précédentes, **caractérisé par le fait que** la coupelle comprend au moins une saillie radiale (33) disposée dans une dépression ou une lumière de la deuxième bague.

11. Dispositif selon l'une quelconque des revendications 1 à 9, **caractérisé par le fait que** la coupelle est emmanchée sur la deuxième bague.

12. Dispositif selon l'une quelconque des revendications précédentes, **caractérisé par le fait que** la coupelle comprend un bourrelet radial apte à coopérer avec un bourrelet radial du capot pour assurer la solidarisation axiale de ces éléments.

## Patentansprüche

1. Federbeinlagerung der Bauweise, die einen ersten Ring (12), einen aus dünnen Blech hergestellten zweiten Ring (13), eine Reihe von zwischen den beiden Ringen angeordneter Wälzkörper (14), eine Abdeckhaube (16), die mit dem ersten Ring verbunden und mit diesem in Berührung steht und eine Schale (11) aufweist, die dazu eingerichtet ist ein Widerlager für eine Feder (10) zu bilden, **dadurch gekennzeichnet, dass** die Schale ein Mittel zur axialen unmittelbaren Verbindung mit dem zweiten Ring aufweist, wobei dieses Mittel dazu eingerichtet ist mit Haltemitteln zusammenzuwirken, die auf einem rohrförmigen Abschnitt des zweiten Rings angeordnet sind.

2. Vorrichtung nach Anspruch 1, **dadurch gekennzeichnet, dass** der zweite Ring einen an die Wälzkörper angepassten torusförmigen Abschnitt (13a), einen sich von dem torusförmigen Abschnitt radial nach innen zu erstreckenden radialen Abschnitt (13c) und einen rohrförmigen Abschnitt (13d) aufweist, der sich auf der den Wälzkörpern abgewandten Seite axial erstreckt.

3. Vorrichtung nach Anspruch 2, **dadurch gekennzeichnet, dass** der zweite Ring einen Halteabschnitt (13e) aufweist, der sich von dem rohrförmigen Abschnitt aus erstreckt.

4. Vorrichtung nach Anspruch 3, **dadurch gekennzeichnet, dass** der Halteabschnitt sich radial nach innen erstreckt.

5. Vorrichtung nach Anspruch 3, **dadurch gekennzeichnet, dass** der Halteabschnitt sich radial nach außen erstreckt.

6. Vorrichtung nach einem der vorhergehenden Ansprüche, **dadurch gekennzeichnet, dass** die Schale eine ringförmige Nut aufweist, die ausgehend von einer mit dem zweiten Ring in Berührung stehenden Fläche ausgebildet ist.

7. Vorrichtung nach Anspruch 6, **dadurch gekennzeichnet, dass** die Nut zwei konzentrische Flächen aufweist, von denen die eine im Wesentlichen zylindrisch und die andere mit wenigstens einer radialen Verstärkung ausgebildet ist, die den Boden der Nut gegenüberliegend angeordnet und dazu eingerichtet ist mit dem zweiten Ring zusammenzuwirken.

8. Vorrichtung nach Anspruch 6 oder 7, **dadurch gekennzeichnet, dass** die Nut einen Durchmesser aufweist, der kleiner ist als der eines gedachten Kreises, welcher durch den Mittelpunkt der Wälzkörper verläuft.

9. Vorrichtung nach einem der Ansprüche 6 bis 8, **dadurch gekennzeichnet, dass** der zweite Ring dazu eingerichtet ist mit der Nut zusammenzuwirken.

10. Vorrichtung nach einem der vorhergehenden Ansprüche, **dadurch gekennzeichnet, dass** die Schale wenigstens einen radialen Vorsprung (33) aufweist, der in einer Vertiefung oder einer Ausnehmung des zweiten Ringes angeordnet ist.

11. Vorrichtung nach einem der Ansprüche 1 bis 9, **dadurch gekennzeichnet, dass** die Schale auf den zweiten Ring aufgeschoben ist.

12. Vorrichtung nach einem der vorhergehenden Ansprüche, **dadurch gekennzeichnet, dass** die Schale einen Radialflansch aufweist, der mit einem Radialflansch der Abdeckhaube zur Herstellung der axialen Verbindungen dieser Elemente zusammenwirken kann.

## Claims

1. Suspension thrust rolling bearing device of the type comprising a first ring (12), a second ring (13) made of thin sheet, a row of rolling bodies (14) arranged between the two rings, a cap (16) attached to and in contact with the first ring and a plate (11) capable of forming a seat for a spring (10), **characterized in that** the plate comprises a means for attaching it directly axially to the second ring, the said means being capable of collaborating with retaining means arranged on a tubular portion of the second ring.

2. Device according to Claim 1, **characterized in that** the second ring comprises a toric portion (13a) tailored to the rolling bodies, a radial portion (13c) extending radially inwards from the toric portion and a tubular portion (13d) extending axially away from the rolling bodies.

3. Device according to Claim 2, **characterized in that** the second ring comprises a retaining portion (13e) extending from the tubular portion.

4. Device according to Claim 3, **characterized in that** the retaining portion extends radially inwards.

5. Device according to Claim 3, **characterized in that** the retaining portion extends radially outwards.

6. Device according to any one of the preceding claims, **characterized in that** the plate comprises an annular groove formed from a surface in contact with the second ring.

7. Device according to Claim 6, charactrized in that the groove has two concentric surfaces, one of them more or less cylindrical and the other having at least one radial enlargement situated away from the bottom of the said groove and capable of collaborating with the second ring.

8. Device according to Claim 6 or 7, **characterized in that** the groove has a diameter smaller than that of the imaginary circle that passes through the centre of the rolling bodies.

9. Device according to any one of Claims 6 to 8, **characterized in that** the second ring is capable of collaborating with the groove.

10. Device according to any one of the preceding claims, **characterized in that** the plate has at least one radial projection (33) arranged in a depression or slot in the second ring.

11. Device according to any one of Claims 1 to 9, **characterized in that** the plate is press-fitted onto the second ring.

12. Device according to any one of the preceding claims, **characterized in that** the plate has a radial bulge capable of collaborating with a radial bulge of the cap to attach these elements together axially.
